# FASCICULE DE BREVET EUROPEEN

(11) **EP 0 924 017 B1**
(45) Date de publication et mention de la délivrance du brevet: **14.08.2002**
(21) Numéro de dépôt: 98403048.6
(22) Date de dépôt: 04.12.1998
(51) Int. Cl.: B23K 10/02, B23K 10/00

(54) **Procédé et dispositif de soudage à l'arc plasma à polarité variable**
Vorrichtung und Verfahren zum Plasmalichtbogenschweissen mit variabeler Polarität
Process and apparatus for variable polarity plasma arc welding

(30) Priorité: 11.12.1997 FR 9715703
(43) Date de publication de la demande: 23.06.1999
(73) Titulaire: LA SOUDURE AUTOGENE FRANCAISE, F-75007 Paris (FR)
(72) Inventeur: Fortain, Jean-Marie, 95520 Osny (FR); Verna, Eric, 95650 Boissy l'Aillerie (FR); Reymond, Christian, 95360 Montmagny (FR)
(74) Mandataire: Le Moenner, Gabriel

(56) Documents cités:
- DE-A- 2 435 022
- FR-A- 2 022 900
- FR-A- 2 232 395
- US-A- 5 045 667
- M.TOMSIC ET AL.: "Keyhole plasma arc welding of aluminium with variable polarity power" WELDING JOURNAL, vol. 63, no. 2, février 1984, pages 25-32, XP002075110

## Description

L'invention concerne un procédé et un dispositif de soudage à l'arc plasma de l'aluminium et des alliages d'aluminium et l'utilisation d'un tel dispositif, comme décrit dans le préambule des revendications 1 et 7. Un exemple d'un tel procédé et dispositif est connu du document DE A 2435022.

Le soudage à l'arc plasma ou soudage plasma est, ainsi que l'enseigne le document "Plasma Arc Welding", chap. 10, pages 330-350, 8e édition, 1991, incorporé ici par références, un procédé de soudage par fusion du métal mettant en oeuvre un chauffage dudit métal au moyen d'un arc électrique se formant entre une électrode non-consommable et la ou les pièces métalliques à souder (arc transferré) ou, selon le cas, entre ladite électrode et la buse de la torche à plasma (arc non-transferré).

Un flux gazeux ionisé délivré par la torche à plasma sert, d'une part, de protection gazeuse et, d'autre part, à tansférer la chaleur générée par l'arc électrique à la pièce à souder et, éventuellement, à canaliser l'arc électrique entre ladite électrode non-consommable et ladite pièce à souder.

On peut employer, en tant que gaz plasmagène, un gaz inerte, tel l'argon ou un mélange comprenant un tel gaz, par exemple un mélange argon/hélium.

Habituellement, les procédés de soudage à l'arc plasma sont mis en oeuvre pour souder les aciers "carbone" ou les aciers inoxydables, en une seule passe, c'est-à-dire en un seul passage, et sans préparation particulière préalable desdites pièces en acier à souder et ce, pour des épaisseurs allant jusqu'à 10 mm.

Ainsi, en mode de soudage "key hole", de par notamment une densité d'énergie élevée et une constriction de l'arc, un trou se forme au droit du joint à souder et la pénétration du flux de gaz plasma est opérée d'une manière fiable selon toute l'épaisseur du matériau.

Par ailleurs, l'aluminium et les alliages d'aluminium sont classiquement soudés par mise en oeuvre de procédés de soudage à l'arc avec flux gazeux inerte de protection, tels les procédés de type TIG (pour Tungsten Inert Gas) ou MIG (pour Metal Inert Gas), plutôt que par mise en oeuvre de procédés de type arc plasma.

Or, depuis quelques années, on assiste à une forte demande de l'industrie, en particulier des industries aéronautique et aérospaciale, pour des procédés de soudage à l'arc plasma, permettant de souder efficacement l'aluminium et les alliages d'alluminium, en particulier en soudage automatique.

Ainsi, le soudage à l'arc plasma en mode "key-hole", d'abord largement répandu en soudage des aciers carbone et inoxydables, a été étendu au soudage de l'aluminium et des alliages d'aluminium.

Le document "Plasma Arc Welding of Aluminium Gas Containers", H. Fostervoll et coll., pages 367-375, incorporé ici par références, décrit un procédé de soudage à l'arc plasma en mode "key-hole" de deux hémisphères ou demi-conteneurs en aluminium, de manière à former, après réunion de ceux-ci et soudage, un conteneur à gaz de 352 mm de diamètre, dont les parois en aluminium ont une épaisseur de 8 mm. Ce procédé met en oeuvre un poste de soudage à polarité variable de type HOBART™ VP-300-S, un système de contrôle du soudage de type ISOTEK™ et de l'argon d'une pureté de 99.99% comme gaz plasmagène.

En outre, le document "Variable Polarity Plasma Arc Welding on the Space Shuttle External Tank", A.C. Numes et coll., Welding Journal, Septembre 1984, pages 27-35, décrit un procédé de soudage à l'arc plasma à polarité variable, utilisé pour la NASA pour réaliser les réservoirs extérieurs de la navette spaciale américaine. Ce document souligne notamment le coût moindre du procédé à l'arc plasma, en comparaison des procédés TIG ou MIG classiques, dans le soudage de l'aluminium, étant donné que ce procédé permet d'éviter notamment de pré-traiter les pièces à souder.

En effet, contrairement à l'acier, l'aluminium et ses alliages requièrent avant soudage, une préparation préalable ou pré-traitement pour en éliminer les oxydes et autres contaminents (poussière, graisse...) susceptibles de les recouvrir. Habituellement, ce pré-traitement est réalisé par décapage chimique ou mécanique, tel un brossage, desdites pièces en aluminium, ce qui augmente d'autant les coûts de production.

Or, il a été observé qu'en faisant varier, au cours du temps, la polarité du courant mis en oeuvre durant le soudage à l'arc plasma, il était possible de provoquer une sorte de décapage de la surface du matériau par le flux plasmagène et ce, préalablement au soudage proprement-dit dudit matériau.

Plus précisément, la polarité variable est une forme de courant alternatif à signaux de forme rectangulaire, assymétriques, paramétrables en durée et en amplitude.

Habituellement, on fait varier cycliquement le courant d'une intensité basse (Id) ou intensité de phase de décapage maintenue durant un temps de décapage (Td), à une intensité haute (Is) ou intensité de phase de soudage maintenue durant un temps de soudage (Ts).

En général, on choisit un temps de décapage (Td) de durée inférieure au temps de soudage (Ts), mais une amplitude du courant durant la phase de décapage supérieure à celle durant la phase de soudage.

En effet, on a constaté que la durée de vie de l'électode en tungstène était fonction du rapport Ts/Td.

En outre, la rentrée de l'électrode dans la tuyère de la torche de soudage, la hauteur de torche par rapport à la pièce ou matériau à souder, et le débit de gaz plasmagène jouent un rôle non-négligeable dans la dynamique de l'écoulement.

Ainsi, en soudage en mode key-hole, il est nécessaire de contrôler, c'est-à-dire de limiter, le débit du gaz plasmagène pour éviter tout coupage intempestif de la pièce. Ceci peut être notamment réalisé en choisissant un diamètre d'électrode aussi petit que possible de manière à ne pas provoquer un écoulement gazeux trop rapide.

A l'inverse, une distance importante de rentrée de l'électrode dans la tuyère et/ou une fréquence de signal de courant plus élevée permettent d'accroître la rigidité de la colonne de plasma et donc de diminuer l'apport en énergie électrique.

Le soudage à polarité variable présente également l'avantage de conduire à une porosité faible du cordon de soudure.

Par ailleurs, le document DE-A-2435022 décrit un procédé de soudage à l'arc plasma de pièces en aluminium revêtu d'oxydes utilisant une torche de soudage micro-plasma équipée d'une électrode non-consommable utilisant des ondes de courant alternatif de forme rectangulaire dont les demi-ondes positives et négatives ne sont pas identiques.

Le but de la présente invention est d'améliorer les procédés de soudage à l'arc plasma à polarité variable de l'aluminium et de ses alliages en proposant un procédé et un dispositif :
- ne présentant pas les inconvénients des procédés classiques,
- permettant d'obtenir une meilleur stabilité du soudage pour les pièces de forte épaisseur, c'est-à-dire pour des pièces ayant une épaisseur de 8 mm et plus, par exemples,
- permettant d'aboutir à un soudage efficace de telles pièces sans préparation des pièces, c'est-à-dire par assemblage bout-à-bout jointif *(square but joint* en anglais), et
- qui soit de mise en oeuvre aisée à l'échelle industrielle.

La présente invention concerne alors un procédé de soudage à l'arc plasma de l'aluminium et des alliages d'aluminium, comprenant:
- une étape d'initiation d'un arc-pilote entre une électrode et une buse de soudage au moyen d'un courant auxiliaire délivré par au moins une source auxiliaire de courant et circulant dans un circuit arc-pilote,
- une étape d'alimentation de ladite buse de soudage en gaz plasmagène,
- une étape d'initiation d'un arc principal entre ladite électrode et un matériau à souder au moyen d'un courant principal délivré par au moins une source principale de courant et circulant dans un circuit principal,
- une étape de variation cyclique de la polarité du courant principal de manière à obtenir au moins une phase de décapage du matériau à une première polarité de courant et au moins une phase de soudage du matériau à une seconde polarité de courant, caracterisé en ce qu' on opère, pendant au moins une partie de la phase de décapage, un arrêt de l'alimentation en courant auxiliaire du circuit arc-pilote et on alimente le circuit principal et le circuit arc-pilote en ledit courant principal.

Selon le cas, le procédé de l'invention comprend l'une ou plusieurs des caractéristiques suivantes :
- on maintient l'alimentation du circuit-arc pilote en ledit courant principal durant toute la phase de décapage;
- durant l'alimentation du circuit-arc pilote en ledit courant principal, on laisse le courant principal se répartir naturellement dans le circuit arc-pilote et dans le circuit principal en fonction des impédances équivalentes de ces circuits;
- durant l'alimentation du circuit-arc pilote en ledit courant principal, la source principale de courant et la source auxiliaire de courant ont un fonctionnement équivalent à un fonctionnement en série;
- durant l'alimentation du circuit-arc pilote en ledit courant principal, la source principale de courant délivre un courant principal d'au moins 100 A, de préférence de 150 à 300 A;
- la durée de la phase de décapage est, de préférence, inférieure à la durée de la phase de soudage.

L'invention concerne, en outre, un dispositif de soudage à l'arc plasma comprenant
- une torche à plasma comportant une buse de soudage munie d'une tuyère et une électrode, de préférence une buse concentrique pour protection annulaire;
- des moyens d'alimentation de ladite torche en gaz plasmagène,
- au moins une source principale de courant à polarité variable programmable, commandable ou pilotable,
- un circuit principal de courant,
- au moins une source auxiliaire de courant,
- un circuit arc-pilote,
- des moyens d'initiation d'un arc-pilote entre l'électrode et la buse,
- des moyens de passage d'un arc pilote à un arc principal,
- des moyens de contrôle permettant de faire varier cycliquement la polarité du courant principal entre une première polarité de courant correspondant à une polarité de phase de décapage et au moins une seconde polarité de courant correspondant à une polarité de phase de soudage.
caractérisé en ce qu'ils comporte:
- des moyens de commande permettant d'opérer un arrêt de l'alimentation en courant auxiliaire du circuit arc-pilote et d'assurer une alimentation du circuit principal et dudit circuit arc-pilote en courant principal, durant au moins une partie de la phase de décapage.

L'invention concerne aussi l'utilisation d'un tel dispositif dans une opération de soudage d'une pièce, c'est-à-dire un élément, un composant, une structure ou analogue, comportant au moins une partie en aluminium ou en un alliage d'aluminium, ainsi qu'un élément pour l'industrie chimique, pétrochimique ou nucléaire, ou pour le transport ferroviaire, naval, aéronautique, routier ou spacial comportant au moins une soudure susceptible d'être obtenue par le procédé de l'invention.

L'invention va maintenant être décrite plus en détail à l'aide d'un schéma d'un mode de réalisation d'un dispositif conforme à l'invention et d'essais comparatifs réalisés avec un tel dispositif, lesquels sont donnés à titre illustratif, mais non limitatif.

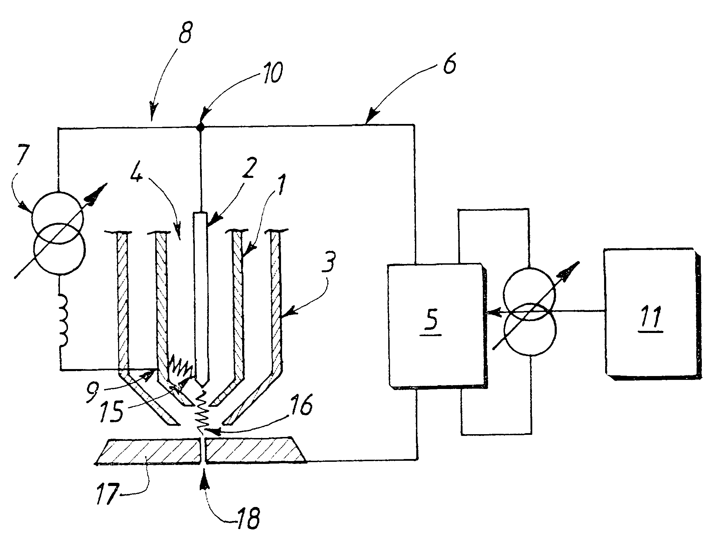

La figure unique annexée représente un schéma d'un dispositif utilisé pour mettre en oeuvre le procédé de l'invention et vérifier son efficacité.

Plus précisément, le dispositif de soudage à l'arc plasma de la figure unique annexée comprend une torche à plasma dotée d'une buse de soudage muni d'une tuyère 1 entourant une électrode 2 en tungstène, ladite tuyère 1 étant elle-même insérée dans une buse extérieure 3 assurant une protection annulaire. Des moyens d'alimentation 4 alimentent la torche en gaz plasmagène.

Le circuit principal 6 de courant est alimenté par une source principale 5 de courant à polarité variable programmable, laquelle est commandée par des moyens de contrôle 11, lesdits moyens de contrôle 11 permettant de faire varier cycliquement la polarité du courant principal entre une première polarité de courant correspondant à une polarité de phase de décapage et au moins une seconde polarité de courant correspondant à une polarité de phase de soudage. La source principale 5 de courant délivre un courant alternatif de 320 A, par exemple.

De manière analogue, un circuit arc-pilote 8 est alimenté par une source auxiliaire 7 de courant.

Par ailleurs, des moyens d'initiation 9 d'arc-pilote permettent d'initier un arc-pilote 15 entre l'électrode 2 et la buse 1, et des moyens d'initiation d'arc principal permettent d'initier un arc principal 16 entre ladite électrode 2 et le matériau 17 à souder, de manière à obtenir un joint de soudure 18.

Durant toute ou partie de la phase de décapage, des moyens de commande 10 assurent l'arrêt de l'alimentation en courant auxiliaire du circuit arc-pilote 8 et une alimentation du circuit principal 6 et du circuit arc-pilote 8 en courant principal.

En d'autres termes, durant les phases de décapage, le fait de maintenir le circuit arc-pilote 8 connecté au circuit principal 6 engendre une répartition naturelle du courant principal entre les deux ciruits en fonction de leurs inductances propres.

Afin de vérifier l'efficacité du procédé et du dispositif de l'invention, plusieurs essais (essais 1 à 5) comparatifs ont été réalisés; les paramètres expérimentaux mis en oeuvre au cours de ces essais sont donnés dans le tableau suivant,

**Tableau**

| Essai n° | 1 | 2 | 3 | 4 | 5 |
|---|---|---|---|---|---|
| Intensité de décapage (A) | 220 | 250 | 310 | 200 | 180 |
| Temps de décapage (msec) | 3.5 | 3.5 | 3.5 | 3.5 | 3.5 |
| Intenisté de soudage (A) | 140 | 180 | 180 | 140 | 140 |
| Temps de soudage (msec) | 8 | 8 | 8 | 8 | 8 |
| Longueur arc (mm) | 10 à 12 | 10 à 12 | 10 à 12 | 3 | 3 |
| Débit (l.min) | 3 | 3 | 3 | 3.5 | 3 |
| Tension (V) | 30 | 31 | 31 | 28 | 28 |
| Vitesse de soudage (cm.min⁻¹) | 24 | 22 | 22 | 25 | 25 |
| Débit (l.min⁻¹) | 20 | 20 | 20 | 20 | 20 |
| Type de fil | NIC 30 | NIC 10 | NIC 30 | NIC 30 | NIC 30 |
| Diamètre fil (mm) | 1.2 | 1.2 | 1.2 | 1.6 | 1.6 |
| Vitesse de dévidage (m.min⁻¹) | 1.4 | 1.4 | 1.4 | 1.8 | 1.8 |
| Diamètre de tuyère (mm) | 3 | 3 | 3 | 3 | 3 |
| Epaisseur plaque (mm) | 6 | 6 | 8 | 6 | 6 |
| Type alliage | AG4 | A5 | AG4 | AG4 | AG4 |
| Fonctionnement arc pilote durant soudage | non | non | non | non | non |
| Fonctionnement arc pilote durant décapage | oui | oui | oui | non | non |

Dans les essais 1 à 5, le gaz annulaire utilisé est un mélange argon/hélium, tel le gaz INARC 6™, et le gaz plasmagène mis en oeuvre est de l'argon, tel le gaz ARCAL 1™; les gaz INARC 6™ et ARCAL 1™ sont commercialisés par la Société L'AIR LIQUIDE. En outre, les fils de type NIC10 et NIC30 sont commercialisés par la Société LA SOUDURE AUTOGENE FRANCAISE et correspondent à des alliages d'aluminium de type 1100 et de type 5356, respectivement.

Les résultats obtenus sont les suivants :
- essai 1 (soudage à plat) : On constate que la surface du cordon de soudure est recouvert d'une pellicule blanchâtre. Toutefois, la pénétration de la soudure est régulière et aucune porosité indésirable n'apparaît après contrôle radiographique.
- essai 2 (soudage à plat) : Le soudage d'un alliage d'aluminium de type A5 nécessite l'apport d'une plus grande quantité d'énergie que celui d'un alliage de type AG4. Néanmoins, la zone décapée est large.
- essai 3 (soudage à plat) : Le régime de soudage est stable et les résultats sont analogues à ceux obtenus à l'essai 1.
- essais 4 et 5 (soudage en position corniche) : Compte-tenu de l'écroulement du bain de métal en fusion, en position corniche, il est préférable d'utiliser des diamètres de fil important (1.6 mm) et une vitesse de dévidage supérieure (1.4 à 1.8 m.min⁻¹). Pour le reste, la qualité des cordons de soudure est sensiblement équivalente à celle des essais 1 et 3 (mêmes paramètres opératoires) et les surépaisseurs des cordons endroit/envers et les raccordements sont satisfaisants. Le taux de porosité est, quant à lui, également sensiblement équivalent à celui des essais 1 et 3.

Il en résulte que, pour une épaisseur donnée de matériau, le procédé de l'invention permet de maintenir un jet de plasma stable et efficace lors du décapage, c'est-à-dire évitant tout coupage intempestif du matériau à souder, et de conduire, en outre, à des cordons de soudure présentant un aspect légèrement oxydé et exempts de porosités.

Le procédé de l'invention peut être utilisé pour souder notamment l'aluminium et les alliages d'aluminium ayant une épaiseur de l'ordre de 4 mm à 10 mm, ou plus.

## Revendications

1. Procédé de soudage à l'arc plasma de l'aluminium et des alliages d'aluminium, comprenant:
- une étape d'initiation d'un arc-pilote entre une électrode et une buse de soudage au moyen d'un courant auxiliaire délivré par au moins une source auxiliaire de courant et circulant dans un circuit arc-pilote,
- une étape d'alimentation de ladite buse de soudage en gaz plasmagène,
- une étape d'initiation d'un arc principal entre ladite électrode et un matériau à souder au moyen d'un courant principal délivré par au moins une source principale de courant et circulant dans un circuit principal,
- une étape de variation cyclique de la polarité du courant principal de manière à obtenir au moins une phase de décapage du matériau à une première polarité de courant et au moins une phase de soudage du matériau à une seconde polarité de courant,
**caractérisé en ce qu'**on opère, pendant au moins une partie de la phase de décapage, un arrêt de l'alimentation en courant auxiliaire du circuit arc-pilote et on alimente le circuit principal et le circuit arc-pilote en ledit courant principal.

2. Procédé selon la revendication 1, **caractérisé en ce qu'**on maintient l'alimentation du circuit-arc pilote en ledit courant principal durant toute la phase de décapage

3. Procédé selon l'une des revendications 1 ou 2, **caractérisé en ce que**, durant l'alimentation du circuit-arc pilote en ledit courant principal, on laisse le courant principal se répartir naturellement dans le circuit arc-pilote et dans le circuit principal en fonction des impédances équivalentes de ces circuits.

4. Procédé selon l'une des revendications 1 à 3, **caractérisé en ce que**, durant l'alimentation du circuit-arc pilote en ledit courant principal, la source principale de courant et la source auxiliaire de courant ont un fonctionnement équivalent à un fonctionnement en série.

5. Procédé selon l'une des revendications 1 à 4, **caractérisé en ce que**, durant l'alimentation du circuit-arc pilote en ledit courant principal, la source principale de courant délivre un courant principal d'au moins 100 A, de préférence de 150 à 300 A.

6. Procédé selon l'une des revendications 1à 5, **caractérisé en ce que** la durée de la phase de décapage est inférieure à la durée de la phase de soudage.

7. Dispositif de soudage à l'arc plasma comprenant :
- une torche à plasma comportant une buse de soudage (1) munie d'une électrode (2),
- des moyens d'alimentation (4) de ladite torche en gaz plasmagène,
- au moins une source principale (5) de courant à polarité variable programmable, commandable ou pilotable
- un circuit principal (6) de courant,
- au moins une source auxiliaire (7) de courant,
- un circuit arc-pilote (8),
- des moyens d'initiation (9) d'un arc-pilote (15) entre l'électrode (2) et la buse (1),
- des moyens de passage d'un arc pilote (15) à un arc principal (16),
- des moyens de contrôle (11) permettant de faire varier cycliquement la polarité du courant principal entre une première polarité de courant correspondant à une polarité de phase de décapage et au moins une seconde polarité de courant correspondant à une polarité de phase de soudage,
**caractérisé en ce qu'**il comprend
- des moyens de commande (10) permettant d'opérer un arrêt de l'alimentation en courant auxiliaire du circuit arc-pilote (8) et d'assurer une alimentation du circuit principal (6) et dudit circuit arc-pilote (8) en courant principal, durant au moins une partie de la phase de décapage.

8. Utilisation d'un dispositif selon la revendication 7, dans une opération de soudage d'une pièce comportant au moins une partie en aluminium ou en un alliage d'aluminium.

## Claims

1. Plasma arc welding process for aluminum and aluminum alloys, which comprises:
- a step of initiating a pilot arc between an electrode and a welding nozzle by supply of an auxiliary current which is delivered by at least one auxiliary current source and flows in a pilot-arc circuit,
- a step of feeding the welding nozzle with plasma gas,
- a step of initiating a main arc between the electrode and a material to be welded by supply of a main current which is delivered by at least one main current source and flows in a main circuit,
- a step of cyclically varying the polarity of the main current so as to obtain at least one phase of descaling the material with a first current polarity and at least one phase of welding the material with a second current polarity,
**characterized by** stopping the supply of auxiliary current to the pilot-arc circuit, for at least part of the descaling phase, and supplying the main circuit and the pilot-arc circuit with the main current.

2. Process according to claim 1, **characterized by** maintaining the supply of the main current to the pilot-arc circuit throughout the descaling phase.

3. Process according to claim 1 or 2, **characterized in that**, while the main current is being supplied to the pilot-arc circuit, the main current is left to be distributed naturally in the pilot-arc circuit and in the main circuit on the basis of the equivalent impedances of these circuits.

4. Process according to any of claims 1 to 3, **characterized in that**, while the main current is being supplied to the pilot-arc circuit, the main current source and the auxiliary current source operate in a manner equivalent to a series operation.

5. Process according to any of claims 1 to 4, **characterized in that**, while the main current is being supplied to the pilot-arc circuit, the main current source delivers a main current of at least 100 A, preferably from 150 to 300 A.

6. Process according to any of claims 1 to 5, **characterized in that** the duration of the descaling phase is less than the duration of the welding phase.

7. Plasma arc welding device comprising :
- a plasma torch having a welding nozzle (1) provided with an electrode (2),
- means (4) for feeding the torch with a plasma gas,
- at least one programmable, controllable or pilot-controllable variable-polarity main current source (5),
- a main current circuit (6),
- at least one auxiliary current source (7),
- a pilot-arc circuit (8),
- means (9) for initiating a pilot arc (15) between the electrode (2) and the nozzle (1),
- means for switching from a pilot arc (15) to a main arc (16),
- control means (11) allowing the polarity of the main current to be varied cyclically between a first current polarity corresponding to a descaling-phase polarity and at least one second current polarity corresponding to a welding-phase polarity,
**characterized in that** it comprises control means (10) allowing the supply of auxiliary current to the pilot-arc circuit (8) to be stopped and allowing the main circuit (6) and the pilot-arc circuit (8) to be supplied with the main current during at least part of the descaling phase.

8. Use of a device according to claim 7 in a welding operation of a piece comprising at least a part made of aluminum or of an aluminum alloy.

## Patentansprüche

1. Verfahren zum Plasmalichtbogenschweißen von Aluminium und Aluminiumlegierungen mit:
- einem Schritt der Zündung eines Pilotlichtbogens zwischen einer Elektrode und einer Schweißdüse mittels eines Hilfsstroms, der von zumindest einer Hilfsstromquelle abgegeben wird und in einem Pilotlichtbogenstromkreis fließt,
- einem Schritt der Versorgung der Schweißdüse mit Plasmagas,
- einem Schritt der Zündung eines Hauptlichtbogens zwischen der Elektrode und einem zu schweißenden Material mittels eines Hauptstroms, der von zumindest einer Hauptstromquelle abgegeben wird und in einem Hauptstromkreis fließt,
- einem Schritt des zyklischen Wechselns der Polarität des Hauptstroms, um zumindest eine Phase der Abtragung des Materials mit einer ersten Strompolarität und zumindest eine Phase des Schweißens des Materials mit einer zweiten Strompolarität zu erhalten,
**dadurch gekennzeichnet, dass** während zumindest eines Teils der Abtragungsphase eine Unterbrechung der Versorgung des Pilotlichtbogenstromkreises mit Hilfsstrom vorgenommen wird und der Hauptstromkreis und der Pilotlichtbogenstromkreis mit dem Hauptstrom versorgt wird.

2. Verfahren nach Anspruch 1, **dadurch gekennzeichnet, dass** die Versorgung des Pilotlichtbogenstromkreises mit dem Hauptstrom während der ganzen Abtragungsphase aufrechterhalten wird.

3. Verfahren nach einem der Ansprüche 1 oder 2, **dadurch gekennzeichnet, dass** während der Versorgung des Pilotlichtbogenstromkreises mit dem Hauptstrom man den Hauptstrom sich auf natürliche Weise in dem Pilotlichtbogenstromkreis und dem Hauptstromkreis in Abhängigkeit von den diesen Stromkreisen entsprechenden Impedanzen verteilen lässt.

4. Verfahren nach einem der Ansprüche 1 bis 3, **dadurch gekennzeichnet, dass** während der Versorgung des Pilotlichtbogenstromkreises mit dem Hauptstrom die Hauptstromquelle und die Hilfsstromquelle eine Betriebsweise aufweisen, die einem Reihenbetrieb entspricht.

5. Verfahren nach einem der Ansprüche 1 bis 4, **dadurch gekennzeichnet, dass** während der Versorgung des Pilotlichtbogenstromkreises mit dem Hauptstrom die Hauptstromquelle einen Hauptstrom von mindestens 100 A, vorzugsweise von 150 bis 300 A, liefert.

6. Verfahren nach einem der Ansprüche 1 bis 5, **dadurch gekennzeichnet, dass** die Dauer der Abtragungsphase kleiner als die Dauer der Schweißphase ist.

7. Vorrichtung zum Plasmalichtbogenschweißen mit:
- einem Plasmabrenner mit einer Schweißdüse (1), die mit einer Elektrode (2) versehen ist,
- Mitteln zur Versorgung (4) des Brenners mit Plasmagas,
- zumindest einer Hauptstromquelle (5) mit veränderlicher, programmierbarer, schaltbarer oder steuerbarer Polarität,
- einem Hauptstromkreis (6),
- zumindest einer Hilfsstromquelle (7),
- einem Pilotlichtbogenstromkreis (8),
- Mitteln zur Zündung (9) eines Pilotlichtbogens (15) zwischen der Elektrode (2) und der Düse (1),
- Mitteln zur Überleitung von einem Pilotlichtbogen (15) zu einem Hauptlichtbogen (16),
- Steuerungsmitteln (11), die es gestatten, die Polarität des Hauptstroms zwischen einer ersten Strompolarität, die einer Abtragungsphase entspricht, und zumindest einer zweiten Strompolarität, die einer Schweißphasenpolarität entspricht, zyklisch wechseln zu lassen,
**dadurch gekennzeichnet, dass** sie
- Schaltmittel (10) umfasst, die es gestatten, während zumindest eines Teils der Abtragungsphase eine Unterbrechung der Hilfsstromversorgung des Pilotlichtbogenstromkreises (8) vorzunehmen und für die Versorgung des Hauptstromkreises (6) und des Pilotlichtbogenstromkreises (8) mit Hauptstrom zu sorgen.

8. Verwendung einer Vorrichtung nach Anspruch 7 bei einem Schweißvorgang eines Werkstücks, das zumindest ein Teil aus Aluminium oder einer Aluminiumlegierung umfasst.
